# EUROPEAN PATENT APPLICATION

(11) **EP 1 806 820 A1**
(43) Date of publication of application: **11.07.2007**
(21) Application number: 06126568.2
(22) Date of filing: 20.12.2006
(51) Int. Cl.: H02J 9/06

(54) **Uninterruptible power supply**

(30) Priority: 05.01.2006 IT PD20060006
(71) Applicant: Liebert Hiross S.p.A., 35028 Piove di Sacco PD (IT)
(72) Inventor: Lazzarato, Moreno, 35020, BRUGINE PD (IT); Petteno', Andrea, 20020, ARESE MI (IT)
(74) Representative: Modiano, Micaela Nadia

(57) **Abstract**

An uninterruptible power supply of the type provided with a cooling system (11) for controlling the temperature of its components which generate heat the most, the cooling system (11) being of the type with a refrigeration cycle and having a refrigeration container (12) inside which at least one of the components which generate heat the most is arranged.

## Description

The present invention relates to an uninterruptible power supply.

Uninterruptible power supplies, known internationally by the acronym UPS, are machines designed to supply electric power to more or less complex user devices, such as for example electric power distribution networks or networks over which data streams flow.

These uninterruptible power supplies are interposed between the external power supply and the user devices with the dual purpose of stabilizing their power supply current and of compensating for any shortlasting blackouts or, in the case of longer blackouts, of ensuring a coverage time which is sufficient to perform the provided procedures for emergency shutdown, which are suitable to protect as much as possible the services ensured by said user devices.

In recent years, UPSs have experienced a definite innovative thrust, in view of the strategic role that they have within systems of equipment intended for the operation of networks.

The increase in the use of UPSs in network power supply systems arises first of all from the need, declared by operators of networks, for example power distribution networks or mobile telephone networks, to provide a substantially continuous service, i.e., with substantially no outage periods.

This need combines with the push to delocalize the control centers for providing such services, as occurs for example for the worldwide extension of wireless systems for telephony, which are inherently delocalized.

As regards power networks, the increasing importance of the use of UPSs is also highlighted by the increase in the power levels required by user devices, an increase in quantity which must be matched by a growth in the quality of the provided service.

Further, the size reached by the rooms in which so-called servers of network systems are placed to work (the term "servers" being used to reference computers intended to perform a service for managing a local or geographical network, the management of peripherals, the exchange and sharing of data among computers, the sending or forwarding of e-mail or the storage of the files in a network site, and other similar activities) is increasing progressively together with the number of servers which work therein and with the increase in the size of said servers, and this proportionally causes ever greater problems in managing the heat generated by said servers and by the equipment associated therewith and contained in said rooms.

In order to meet the needs of installations having the most disparate performance and environmental characteristics, both small UPSs which are dedicated to preventing data loss from the memory of an individual personal computer and UPSs which have a higher capacity and are suitable to serve cabinets crowded with powerful and compact servers, such as so-called "blade servers", are currently known and widespread; finally, large uninterruptible power supplies are finally known which are to be installed in parallel in order to ensure the delivery of stabilized current which is intended to supply entire commercial districts.

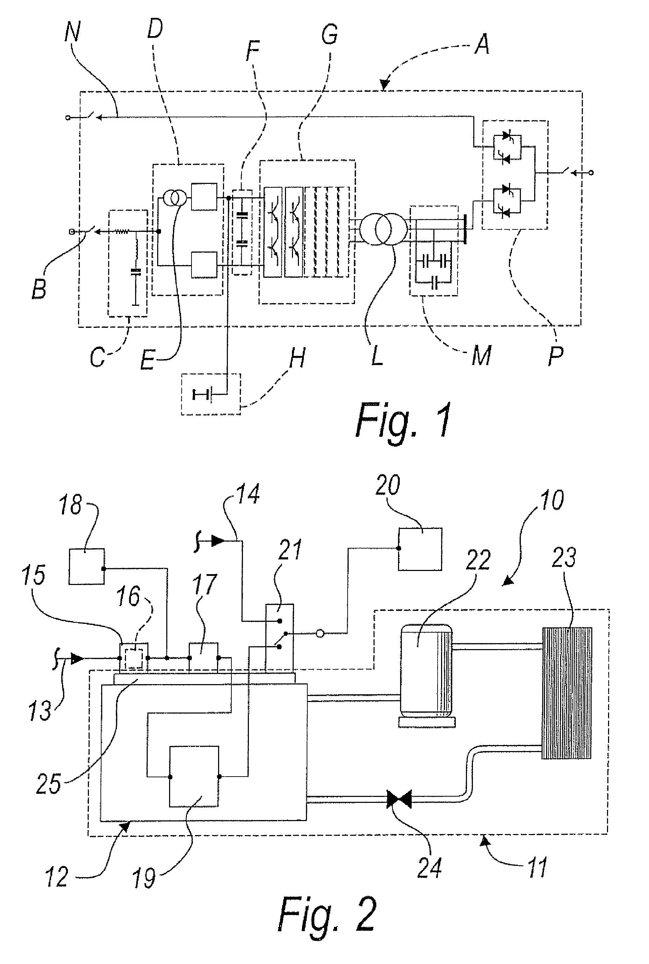

A generic configuration of a UPS is shown schematically in Figure 1 and is designated therein by the reference letter A.

The UPS shown in Figure 1 comprises:
- a main power supply line B, on which are visible in the following order: an input filter C, a rectifier D with which an input transformer E is associated which is suitable to improve the waveform of the current drawn from the line, an additional capacitive filter F, an inverter G, which is adapted to convert into AC the DC that arrives from the rectifier D or from one or more batteries H connected to the main power supply line B, and an output transformer L, which is suitable to isolate the user device from the DC voltage and from the input line, and an output filter M,
- a bypass secondary power supply line N, which is connected directly to the network or to a generator,
- a static switch P, which is suitable to connect to user devices alternately either the main power supply line A or the bypass line N.

Technological development linked to the spread of the use of the uninterruptible power supplies requires dealing with a broad range of problems.

The market requires machines which are cheap, reliable, efficient, compact, easy to maintain and have a low electrical and thermal impact, but the demand for small size clashes with the possibility to have low thermal impact on the system.

In particular, it is found that control of the heat contributed by the UPS to the system with which it is associated is particularly delicate, since high temperatures tend to reduce the efficiency of said UPS in addition to requiring the use of more expensive components and materials.

The aim of the present invention is to provide an uninterruptible power supply particularly for electric power distribution networks and data transmission networks which can have a lower thermal impact than known types of uninterruptible power supply.

Within this aim, an object of the present invention is to provide an uninterruptible power supply whose dimensions and consumption are competitive with respect to known types of uninterruptible power supply.

Another object of the present invention is to provide an uninterruptible power supply whose capacity, efficiency and stability are not lower than those of known types of uninterruptible power supply.

Another object of the present invention is to provide an uninterruptible power supply particularly for electric power distribution networks and data transmission networks which can be manufactured with known systems and technologies.

This aim and these and other objects, which will become better apparent hereinafter, are achieved by an uninterruptible power supply provided with a cooling system for controlling the temperature of its components which generate heat the most, characterized in that said cooling system is of the type with a refrigeration cycle and has a refrigeration container inside which at least one of said components which generate heat the most is arranged.

Further characteristics and advantages of the invention will become better apparent from the following detailed description of a preferred but not exclusive embodiment thereof, illustrated by way of non-limiting example in the accompanying drawings, wherein:
Figure 1 is a diagram of a generic known type of uninterruptible power supply;
Figure 2 is a diagram of a cooling system for an uninterruptible power supply according to the invention.

With reference to the figures, an uninterruptible power supply according to the invention is generally designated by the reference numeral 10.

The uninterruptible power supply 10 is provided with a cooling system 11 for controlling the temperature of its components which generate heat the most.

The cooling system 11, described in greater detail hereinafter, is of the type with a refrigeration cycle and has a refrigeration container 12 in which at least one of said components which generate heat the most, specified hereinafter in greater detail, is positioned.

In its embodiment described here by way of non-limiting example of the invention, the uninterruptible power supply 10 comprises a main power supply line 13 and a secondary bypass power supply line 14. The following are arranged on the main power supply line 13:
- a rectifier 15, optionally preceded by an input filter, which is not shown for the sake of simplicity and is suitable to improve the waveform of the current drawn from the line,
- an input transformer 16, which is associated with the rectifier 15 and also is suitable to improve the waveform of the current drawn from the line,
- an inverter 17, which is suitable to convert into AC voltage the DC voltage that arrives from the rectifier 15 or from one or more batteries 18 connected to the main power supply line 13,
- an output transformer 19,
- an optional output filter, not shown.

The bypass secondary power supply line 14 connects directly the generic user device 20 to the network or to a generator.

The uninterruptible power supply 10 also comprises a static switch 21, which is suitable to connect the user device 20 either to the main power supply line 13 or to the bypass secondary power supply line 14.

The cooling system 11 is constituted by a refrigeration circuit, which comprises a compressor 22 which is suitable to compress a refrigerant in the gaseous phase in order to send it to a heat exchanger 23, in output from which the refrigerant, in the liquid phase, is suitable to pass through a throttling element 24 and from there into the refrigeration container 12.

As mentioned, at least one of the components of the uninterruptible power supply that generates heat the most is positioned within the refrigeration container 12.

The refrigerant, superheated by contact with said at least one component, returns to the gaseous phase and exits from the container 12 to return in input to the compressor 22.

The components which generate heat the most cited above are generally the rectifier 15, the input transformer 16, the inverter 17, the output transformer 19 and the static switch 21.

The input filter, if present, also would have to be included among these components.

In the embodiment of the uninterruptible power supply 10 described here by way of non-limiting example of the invention, the output transformer 19 is arranged inside the refrigeration container 12.

At least some of the remaining components which are not contained within the container 12 are arranged around the refrigeration container 12 and in contact with it.

In particular, the refrigeration container 12 is provided externally with a plate 25 for cooling at least one of the remaining components, which is arranged in contact with the plate 25.

In the present embodiment of the invention, the plate 25 is adapted to cool the rectifier 15 and the associated input transformer 16, the inverter 17 and the switch 21, each of which is constituted by a module made of semiconductor material and is arranged, as shown schematically in Figure 2, in contact with the plate 25.

The plate 25 also is cooled, by conduction through the walls of the container 12, by the refrigerant in the liquid state which is present inside the container 12.

In another embodiment of the invention, not shown for the sake of simplicity, the rectifier 15, the input transformer 16, the inverter 17, the switch 21 and any other components which generate heat the most also are arranged inside the refrigeration container 12, inside which they are struck by a refrigerant liquid which insulates them in addition to cooling them.

In practice it has been found that the invention thus described solves the problems noted in known types of uninterruptible power supply.

In particular, the present invention provides an uninterruptible power supply which is capable of a lower thermal impact than known types of uninterruptible power supply.

Moreover, the present invention provides an uninterruptible power supply whose space occupation and consumption are competitive with respect to known types of uninterruptible power supply, bearing in mind that the heat exchanger 23 is arranged remotely, generally outside the environment in which the uninterruptible power supply 10 is installed, and therefore does not require an appropriately provided volume to be installed in the space intended to contain the uninterruptible power supply 10.

Further, the present invention provides an uninterruptible power supply whose capacity, efficiency and stability are not lower than those of known types of uninterruptible power supply.

Moreover, the present invention provides an uninterruptible power supply which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000006 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An uninterruptible power supply provided with a cooling system (11) for controlling the temperature of its components which generate heat the most, **characterized in that** said cooling system (11) is of the type with a refrigeration cycle and has a refrigeration container (12) inside which at least one of said components which generate heat the most is arranged.

2. The uninterruptible power supply according to claim 1, **characterized in that** it comprises, on a main power supply line (13):
- a rectifier (15), with which an input transformer (16) is associated which is suitable to improve the waveform of the current drawn from the line,
- an inverter (17), which is suitable to convert into AC voltage the DC voltage that arrives from said rectifier (15) or from one or more batteries (18) which are connected to said main power supply line (13),
- and a static switch (21), which is suitable to connect to the user device (20) either said main power supply line (13) or a bypass secondary power supply line (14), which is connected directly to the network.

3. The uninterruptible power supply according to the preceding claims, **characterized in that** it also comprises, between said inverter (17) and said switch (21), an output transformer (19).

4. The uninterruptible power supply according to the preceding claims, **characterized in that** said cooling system (11) is constituted by a refrigeration circuit which comprises a compressor (22) which is suitable to compress a refrigerant in the gaseous phase in order to send it to a heat exchanger (23), in output from which said refrigerant, in the liquid phase, is suitable to pass through a throttling element (24) and from there to said refrigeration container (12), inside which at least one of said components of the uninterruptible power supply (10) which generates heat the most is positioned, said refrigerant being suitable to exit in the gaseous phase from said container (12) in order to return in input to said compressor (22).

5. The uninterruptible power supply according to the preceding claims, **characterized in that** said components which generate heat the most include said rectifier (15), said input transformer (16), said inverter (17), said output transformer (19) and said static switch (21).

6. The uninterruptible power supply according to the preceding claims, **characterized in that** said output transformer (19) is positioned within said refrigeration container (12).

7. The uninterruptible power supply according to the preceding claims, **characterized in that** at least part of the remaining components of the uninterruptible power supply (10) which are not contained within said container (12) are positioned around said refrigeration container (12) and in contact with it.

8. The uninterruptible power supply according to the preceding claims, **characterized in that** said refrigeration container (12) is provided externally with a plate (25) for cooling at least one component of the power supply (10) which is arranged in contact with said plate (25).

9. The uninterruptible power supply according to the preceding claims, **characterized in that** said plate (25) is suitable to cool the rectifier (15) and the associated input transformer (16), the inverter (17) and the switch (21), each of which is arranged in contact with said plate (25).

10. The uninterruptible power supply according to claims 1 to 5, 7 and 8, **characterized in that** said rectifier (15), said input transformer (16), said inverter (17), said switch (21) and any other components which generate heat the most are arranged within the refrigeration container (12).
